# EUROPEAN PATENT APPLICATION

(11) **EP 2 868 603 A1**
(43) Date of publication of application: **06.05.2015**
(21) Application number: 14191824.3
(22) Date of filing: 05.11.2014
(51) Int. Cl.: B65G 60/00

(54) **Integrated stacking device and conveyor**

(30) Priority: 05.11.2013 US 201361900153 P
(71) Applicant: United Sortation Solutions Inc., Owings Mills, Maryland 21117 (US)
(72) Inventor: Joice, Joseph H., Baltimore, MD Maryland 21212 (US); Zerr, Jeffrey M., Union Bridge, MD Maryland 21791 (US); Eisenberg, Howard, Woodbine, MD Maryland 21797 (US)
(74) Representative: Lecca, Patricia S.

(57) **Abstract**

The invention comprises a container stacking operation integrated into a conveyor system for transporting products such as totes (2) or containers. In a preferred embodiment a vertical stacking operation (1) is located proximal to a product delivery station (2, 4, 5, 6, 7, 8) so that the use and storage of containers or totes (2) can be efficiently integrated into a product conveying system.

## Description

### Introduction and Background to the Invention

Devices for moving items traveling on a conveyor to a delivery station and devices for stacking empty totes or containers exist as completely separate parts of a typical product conveying system or package handling operation. As a result, the movement of reusable containers (or totes) throughout the facility where the conveying system resides requires constant shuffling of both the full and empty totes. This constant movement can cause congestion and bottle-necks within the system and ultimately causes delays in order delivery and expenses in over-staffing. The invention here efficiently combines the conveying, storage, handling with a stacking and de-stacking of totes operation. In one aspect, after totes have delivered their contents to a sorting or delivery station, the reusable totes can be efficiently stored, stacked, and put back into use from an integrated device that combines the conveyance of totes with the stacking and storage or empty totes. The integrated devices can be controlled to operate various conveying, storage, and package handling operations as exemplified below, while at the same time efficiently managing the use of and location of empty totes.

### Brief Summary of the Invention

The embodiments, advantages, and uses described here and exemplified in the drawings are examples of the content of the invention and are not meant to limit the scope of the invention. In a preferred embodiment, a Vertical Reciprocating Conveyor (VRC) is equipped with an integrated tote-stacking or de-stacking device. This integrated tote-stacking or de-stacking device facilitates the fluid movement of both empty and full totes to and from operator workstations.

In one location, the operations capable through the integrated devices of the invention allow the restocking of material into a storage receptacle; this can be referred to as a PUT operation. This also can be described as the in-feed of full totes and the discharge of empty totes. A secondary operation, which can be at the same or a second location, consists of the selection and picking of items out of a storage location for transport to a downstream process, called a PICK operation. PICK is essentially the reverse of the PUT operation and the equipment will receive empty totes and discharge full totes as part of the PICK process. Depending on the location within the operational flow of totes, the same equipment can be configured to handle either or both of these operations. As noted, multiple locations with one or multiple operations can be used in a single conveying system.

One efficient movement of the individual totes within these operations includes a vertical flow to create a compact delivery system. A vertical operation is not required, but this embodiment is depicted in the drawings and is a preferred example. During the PUT operation, full totes are diverted to different stations based on instruction via a linear conveyor divert sorter. Each destination off of the linear sorter can service two or more different PUT stations. Since these stations can be located on a different vertical planes or different areas, the tote can be sent to an elevation change area and then proceed through a secondary decision mechanism to reach its final destination. The invention will perform both of these functions based on a desired final destination and the availability of a particular station. Once the full tote has arrived at a station or elevation, the operator will remove all of the items from the tote and place them into storage locations or for delivery. After the package/product is removed from the tote and the tote is completely empty, an operator or arm will place the empty tote onto a return conveyor. The same VRC that is used to deliver full totes can will collect the empty totes from the return conveyor and deliver it to an upper elevated storage location. The storage location, that is located directly above the VRC, can receive a set total of empty totes and nest them into a consolidated stack. Once the stack of totes is built, the VRC will lower the stack to the same vertical plain as the linear conveyor divert sorter. When the stack is in position, it will be discharged from the VRC and onto a conveyor for re-introduction into the PICK operation. Overall this combined and integrated equipment will deliver, for example, five full totes to operators or stations and then stack and remove the five empty totes as part of a complete cycle.

As part of the operational flow of totes throughout the overall system, stacks of empty totes take up less space, especially when considering the conveying surfaces of a conveying system. To take advantage of the stacked totes and to utilize less space, it is acceptable to interlace the empty totes with the full totes within the same internal distribution network. The stack of empty totes will be conveyed back to a Receiving Area or to a PICK area. Once the stacks of empties are received at the PICK, the reverse of the PUT operation can commence. Empty totes can be de-stacked and distributed to stations that are on different elevations. These empty totes will be presented to an operator so they can place selected items (out of storage) into a tote. When an operator or robot arm is finished loading a tote, it will be sent back to the PICK VRC for extraction and delivery to a downstream PUT process. Overall this equipment will de-stack and deliver totes to operators and then remove full totes as part of a complete cycle.

Various commercially available controller units and PC-based control products are available and can be selected for use in the control, sensor, and monitoring aspects commonly adopted in a conveyor system or totes management system as described here. A detailed discussion is not required for the present invention, but, for example, a master controller (23) as depicted in the Figures may include a computer system, which may include one or more types of programmable logic controller and/or personal computer with software adapted to communicate with parts of the conveyor and sensors. Some options include industrial programmable controllers such as the Siemens universal controllers, Rockwell ControlLogix, SLC or PLC 5 series, Beckhoff Automation, or Mitsubishi Q series, and in addition may use a control algorithm, such as Rockwell SoftLogix or National Instruments Labview. Any other device capable of receiving inputs from optional sensors, performing calculations based on such inputs, and generating control actions through servomotor controls, electrical actuators or electropneumatic, electrohydraulic, and other actuators can be selected. Programming the motors or robotics for conveying totes and articles as described here is within the skill of the art. In addition, inspection sensors may added to the system and configured and used as photo-optic sensors to receive either reflected or transmitted light in order to determine the presence, absence or location of a specific tote or other object in the conveying system. Inspection sensors may also be adopted and configured as a vision system or other sub-processing device to perform detection functions and accurately determine the status of an empty tote or object. Particular examples of inspection sensors include Cognex Insight, DVT Legend or Keyence smart cameras, component vision systems such as National Instruments PXI or PC based vision system like Cognex VisionPro or any other vision system software to run on a PC platform. The sensors and the master controller used may be connected directly with a communication network

### Brief Description of the Drawings

Fig 1 depicts an exemplary integrated tote stacking and de-stacking and sorting device.
Fig 2 depicts a similar device as in Fig. 1, shown in an exemplary drawing.

### Description of the Invention

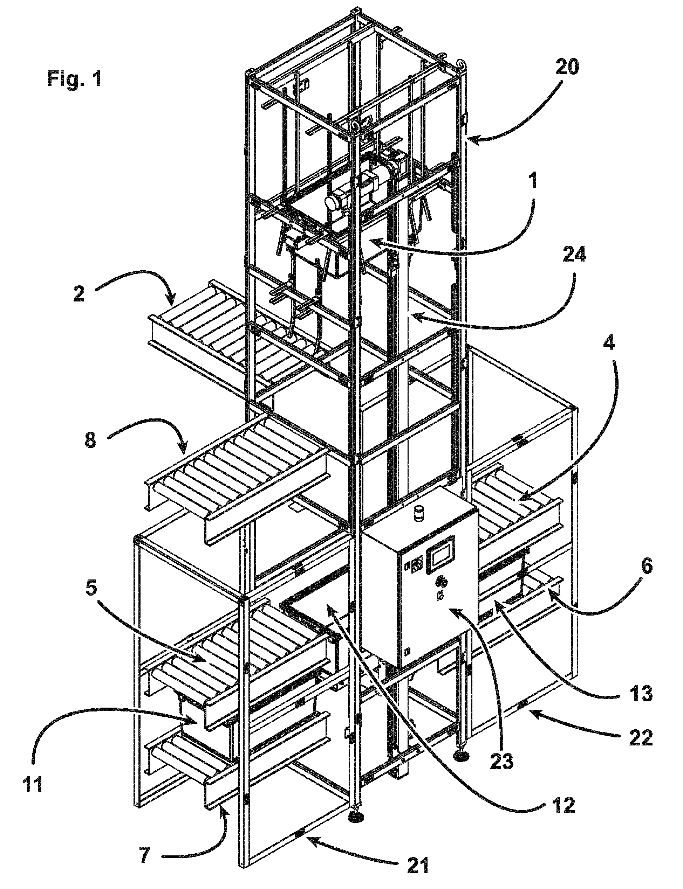

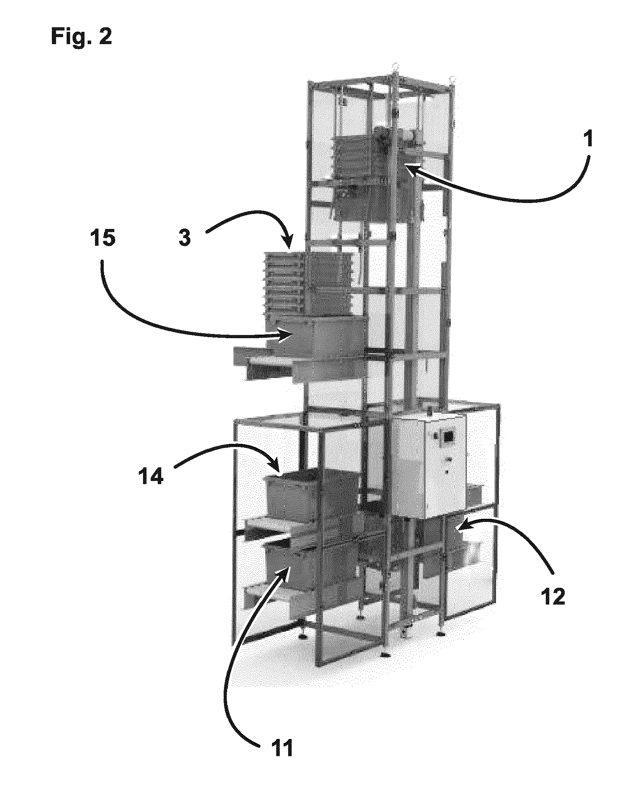

In Figs 1 and 2, totes labeled (1) show a single set of stacked empty totes at the top of a vertical stacking operator. Tote (12) is at the receiving position of the tote stacking operation, where empty totes are placed in order to be stacked at the top of a vertical conveying device (24). Totes (11) and (13) shown in Fig. 2, for example, are empty and ready to be placed into the vertical stacking receiving position of tote (12). Areas or stations (4), (5), (6), (7), and (8) depict different areas, here different elevations, where totes and their contents are processed through the operation. When emptied, they can be placed into the vertical receiving location shown as tote (12). In Fig. 2, totes (11), (14), and (15) are empty and waiting at a station or elevation after they have delivered their contents to an operator. After a set number of empty totes are stacked as in (1) of Fig 2, the entire stack can be moved on a conveyor (13) to a desired position in the conveying system. Tunnel guards (21) and (22) are positioned at the lower level as operator safety features to protect from moving components. The master controller (23) for the vertical stacking operation can control various aspects of the integrated device, including the number of empty totes that are lifted into a stacking position at top (1), which can be set at a desired number. Controllers and sensors for monitoring the totes during the elevating and stacking operation are known, as well as sensors to ensure that totes are completely empty. The ends of the conveyors shown in the Figs can be connected to other parts of the conveying system so that sets of stacked empty totes can be delivered to a desired position in a closed loop, or the stacks can be simply placed back on a conveyor to be handled at another position or stored off the conveyor.

### Exemplary Operational Flow set up for PICK

Stacks of empty totes enter the unit on an elevated conveyor line (2) and place into the destacker (1). One tote is removed from the stack and placed on available space located on either receiving conveyor lines (4)(5). The empty totes are filled with product and placed on conveyors that are located under (4)(5) to head back into a desired direction (6)(7). The full tote will load onto shelf (12) and elevated via the linear actuator (24) to the upper position and discharged onto the take-away conveyor line such as (8).

### Exemplary Operational Flow set up for PUT

Full totes will enter the unit via an upper conveyor (15). That full tote will be lowered and delivered to conveyor (14). The full tote will be emptied and place on conveyors located under (14). The lower conveyor lines (11)(12) will feed empty totes into the integrated stacking operation. The empty tote will be elevated and placed into a stack (1). Once the stack reaches the desired amount, the stack will be discharged on the upper conveyor line (3).

## Claims

1. An integrated container stacking device and container sorting device comprising at least one tote sorting or delivery location and a tote stacking operation station positioned so that the tote stacking occurs proximate to the sorting or delivery location; and comprising a controller to count and manage the location of stacked empty totes.

2. The device of claim one that can set up for either or both of a tote stacking operation or a tote destacking operation.

3. The device of claim 1 further comprising an on demand empty tote feed/dispensing unit.

4. The device of claim 1 further comprising an on demand empty tote buffering or storage unit

5. The device of claim 1, further comprising an omni-directional, multifunctional, and compact vertical transport unit for totes.

6. A vertical distribution module capable of being used in a conveying system.

7. A method of stacking and destacking totes in a conveying system comprising receiving totes at a delivery station, moving an empty tote to a vertical stacking station, and stacking a desired number of empty totes for a desired period of time in a conveying operation.
